Europäisches Patentamt

European Patent Office

Office européen des brevets

(19)

(11) Veröffentlichungsnummer: **0 161 554**
A2

# (12) EUROPÄISCHE PATENTANMELDUNG

(21) Anmeldenummer: 85105019.5

(22) Anmeldetag: 25.04.85

(51) Int. Cl.⁴: **F 16 F 13/00,** B 60 K 5/12

(30) Priorität: 16.05.84 DE 3418123

(43) Veröffentlichungstag der Anmeldung: 21.11.85
Patentblatt 85/47

(84) Benannte Vertragsstaaten: **AT BE DE FR GB IT NL SE**

(71) Anmelder: **DIEHL GMBH & CO., Stephanstrasse 49,
D-8500 Nürnberg (DE)**

(72) Erfinder: **Remmel, Jochen, Dr., Becherstrasse 17,
D-5630 Remscheid (DE)**
Erfinder: **Buchinger, Robert, Berghausen 16,
D-5630 Remscheid (DE)**

(74) Vertreter: **Hofmann, Gerhard, Dipl.-Ing. et al,
Stephanstrasse 49, D-8500 Nürnberg (DE)**

(54) Elastisches Gummilager mit integrierter hydraulischer Dämpfung.

(57) Zur Dämpfung von Schwingungen von Geräten, insbesondere Kraftfahrzeugmotoren, sowie zur Vermeidung starker Resonanzüberhöhungen bei ca. 12 Hz, wird ein elastisches Gummilager (1; 35) vorgeschlagen, bei dem die Dämpfungsflüssigkeit von einem Arbeitsraum (22) über kugelförmige Strömungsflächen mit entsprechender Oberflächenstruktur (30 bis 32) oder Strömungswiderstand einer Membran (50) in einen Ausgleichsraum (23) gepumpt wird. Arbeitsgeräusche werden durch entkoppelte Lagerung der Trennwand und durch einen Freiweg der Membran (16; 41; 50) vermieden.

Zur Verminderung der dynamischen Versteifung bei höheren Frequenzen wird der Ausgleichsraum (23) mit integriertem Drosselsystem im Lagergehäuse (4) zusätzlich elastisch aufgehängt.

P 772 Euro

B/Hr.

0161554

1

DIEHL GMBH & CO., 8500 Nürnberg

Elastisches Gummilager mit integrierter
hydraulischer Dämpfung

Die Erfindung bezieht sich auf ein elastisches Gummilager nach dem
Oberbegriff des Anspruches 1.

Aus der DE-PS 32 25 700 ist ein elastisches Gummilager bekannt,
bei dem ein Lagerkern, ein ringförmig ausgebildetes Federelement
und eine Bodenplatte einen mit einer hydraulischen Flüssigkeit gefüllten Arbeitsraum umschließt. Der Arbeitsraum ist von einem volumenveränderlichen, flüssigkeitsgefüllten Ausgleichsraum über eine
mit Schlitzen versehene Trennwand aus einem elastischen Werkstoff
und beidseitig dazu angeordneten starren Trennwänden mit Durchbrechungen getrennt. In den Trennwänden ist ein Ringkanal vorgesehen.
Bei Einleitung von Schwingungen verändert sich der auf die Trennwand einwirkende Druck. Einer Drucksteigerung entgegen wirkt der
zunehmende Übertritt von Flüssigkeit durch die Drosselöffnung, der
bei Erreichen des Grenzdruckes sein Optimum erreicht. Tritt Druckabfall ein, wird dieser durch den sich zu einem Schlitz öffnenden
Schnitt kompensiert. Der Drosselquerschnitt erfährt insofern eine
stetige Erweiterung in Abhängigkeit von der zur Verfügung stehenden
Druckdifferenz zwischen dem Arbeits- und dem Ausgleichsraum, wodurch
besonders bei Schwingungen mit großer Amplitude und kleiner Frequenz
zusätzlich zur Werkstoffdämpfung eine hydraulische Dämpfung hinzukommt.

Nachteilig ist dabei, daß im überkritischen Bereich Schwingungen mit hoher Frequenz und kleinen Amplituden nur ungenügend akustisch isoliert werden, da die bisher bekannt gewordenen Lager mit Zunahme der Frequenz sich sehr stark dynamisch versteifen.

Die Aufgabe der Erfindung besteht darin, ein elastisches Gummilager mit integrierter hydraulischer Dämpfung vorzuschlagen, welches im unterkritischen Bereich ("Motorstuckerei" bei 6 - 20 Hz) die erwünschte hohe Dämpfung besitzt, im überkritischen Bereich aber nicht dynamisch versteift und damit eine gute Körperschallisolation besitzt.

Wesentlich für die Erfindung ist die neuartige Anordnung von Arbeitsraum und Ausgleichsraum, wodurch eine sichere Entkopplung des Ausgleichsraumes einschließlich des integrierten Drosselsystems bei höheren Frequenzen gewährleistet wird. Bei kleinen Amplituden und hohen Frequenzen führen damit sowohl Ausgleichsraum als auch das Drosselsystem über die Flüssigkeitssäule die selben Schwingungen durch, wie sie der Tragfeder über das Schwingungssystem Motor-Karosserie aufgezwungen werden, ohne daß hydraulische Dämpfung einsetzt. Bei niedrigen Frequenzen und großen Amplituden sichert die halbkugelförmige Strömungsfläche, wie sie konstruktiv erst durch die schon angesprochene besondere Anordnung von Ausgleichsraum zu Arbeitsraum möglich wird, ein Maximum an viskoser Dämpfung im unterkritischen Bereich.

Damit ist der Zielkonflikt, der bei der Auslegung einer elastischen Motorlagerung entsteht, lösbar: Im Bereich niedriger Frequenzen und großer Amplituden wird das "Motorstuckern" verringert, da sich das Lager aufgrund der hohen Dämpfung relativ hart verhält, im Bereich hoher Frequenzen und kleiner Amplituden ist aber eine gute Körperschallisolation erreichbar, da durch das Entkopplungssystem eine vergleichsweise weiche Lagerung erzielt wird.

0161554

Vorteilhafte Weiterbildungen des Erfindungsgedankens sind den Unteransprüchen zu entnehmen.

Nach Anspruch 2 ist das Gummilager volumenmäßig sehr klein ausführbar. Die Entkopplungs-Charakteristik ist durch die Konstruktion und/oder die Materialauswahl der elastischen Lagerung so festzulegen, daß ein verhältnismäßig weicher Einsatz der hydraulischen Dämpfung vorliegt. Eine Geräuschentwicklung, wie Klappern des Gummilagers bei plötzlichen Lastwechseln, ist vermieden.

Nach Anspruch 3 ist die Membran noch zusätzlich entkoppelt.

Hierzu kann diese nach Anspruch 4 zwischen zwei siebartigen, kugeligen Stützkörpern angeordnet sein oder nach Anspruch 5 unter dem kugelförmigen Stützkörper sitzen und mit Wegbegrenzung an diesem elastisch angekoppelt sein.

Arbeitsgeräusche werden nach den Ansprüchen 6 und 7 vermindert. Die kugelförmige Membran führt zu einem flächenhaft ausgedehnten Überströmungsfeld maximaler Größe. Durch Profilierung der Strömungsoberfläche liegen ineinander verschlungene Kanäle vor, die die Arbeitsgeräusche dämpfen.

Nach Anspruch 6 wird erreicht, daß bei großem Druckunterschied die Membran Strömungskanäle größeren Querschnitts ermöglicht, indem die Membran partiell von dem starren Stützkörper abgehoben wird. Die strukturierte Oberfläche der elastischen Membran dämpft die Arbeitsgeräusche. Einen wesentlichen Beitrag zur Verminderung der Arbeitsgeräusche wird durch Verwendung des elastischen Materials für die Membran erreicht.

Ausführungsbeispiele der Erfindung sind in der Zeichnung dargestellt:
Es zeigen:

Fig. 1  ein elastisches Gummilager;

Fig. 2  die elastische Membran nach Fig. 1 mit
verschiedenen Oberflächenstrukturen;

Fig. 3  eine gegenüber Fig. 1 abgewandelte Form der
Trennwand und ihre Lagerung;

Fig. 4  eine von Fig. 1 abweichende Ausbildung der
Trennwand.

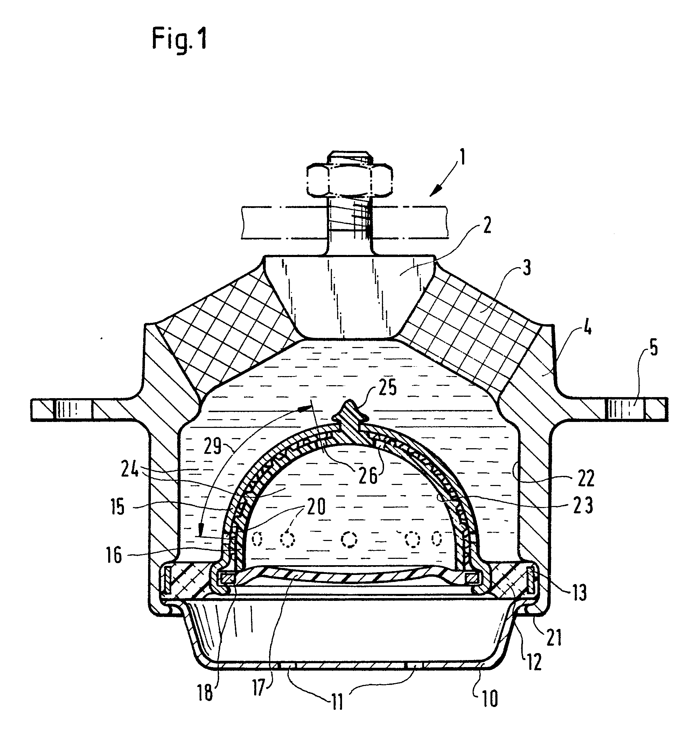

Ein elastisches Lager 1 besteht nach Fig. 1 aus einem Motorauflager 2, einem ringförmigen Federelement 3, einem Gehäuse 4 mit Widerlagern 5, einer Bodenkappe 10 mit Entlüftungsöffnungen 11, einem elastischen Ring 12 mit Versteifung 13, einem anvulkanisierten Stützkörper 15, einer elastischen Membran 16 und einer elastischen Wand der Ausgleichskammer 17 mit Versteifungsring 18.

Das Motorauflager 2 und das Gehäuse 4 sind mit dem Federelement 3 durch Vulkanisieren miteinander verbunden.

Der Stützkörper 15 weist an seiner Basis ringförmig angeordnete Öffnungen 20 auf.

Der mit dem Ring 12 vulkanisierte Stützkörper 15 ist zusammen mit der Bodenkappe 10 bei 21 in das Gehäuse 4 eingebördelt. Desgleichen ist die elastische Wand der Ausgleichskammer 17 in den Stützkörper 15 eingebördelt.

Ein Arbeitsraum 22 und ein Ausgleichsraum 23 sind mit Dämpfungsflüssigkeit 24 gefüllt.

0161554

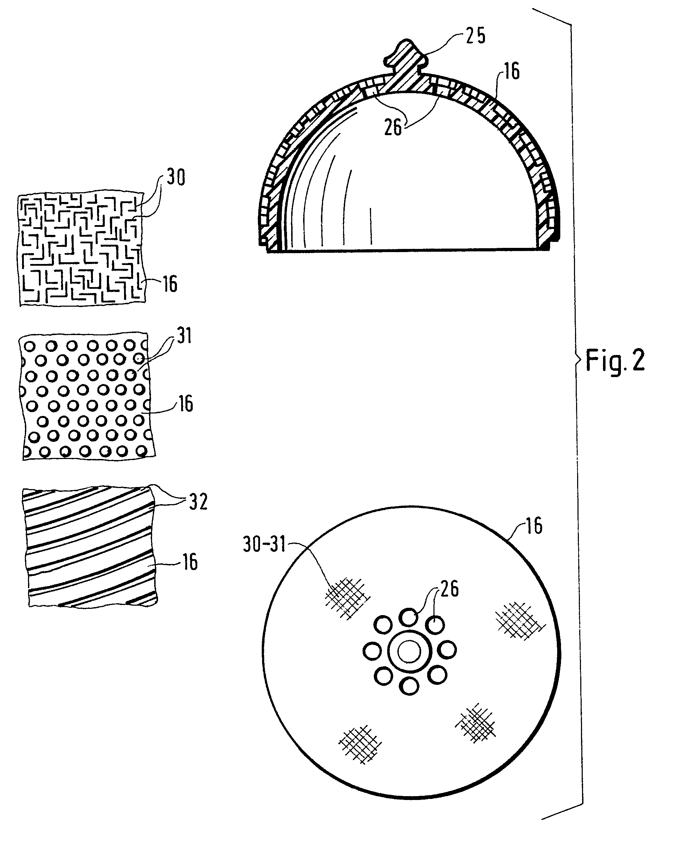

Nach Fig. 2 weist die Membran 16 einen Befestigungsnoppen 25 und dazu benachbarte Öffnungen 26 auf. Die Oberfläche der Membran 16 ist durch labyrinthförmig angeordnete, abgwinkelte Stege 30, Noppen 31 oder wendelförmig angeordnete Ringstege 32 strukturiert. Die Membran 16 kann jedoch auch eine Misch-Struktur aus den vorgenannten oder auch anderen Elementen bzw. Flächen aufweisen.

Im unterkritischen Bereich, nämlich bei Schwingungen großer Amplituden und kleinen Frequenzen wird Flüssigkeit 24 aus dem Arbeitsraum 22 in den Ausgleichsraum 23 gepumpt. Die hohe Dämpfung wird durch die kugelförmige Strömungsfläche zwischen dem Stützkörper 15 und der Membran 16 erreicht, wobei die Flüssigkeit - bedingt durch die strukturierte Oberfläche der Membran 16 einen Weg zurücklegt, der ein Mehrfaches des Bogenabschnittes 29 zwischen den Öffnungen 20 und 26 entspricht.
Im Motorstuckerbereich bei ca. 9 - 12 Hz tritt keine Resonanzüberhöhung auf.

Im überkritischen Bereich bei Schwingungen mit kleinen Amplituden und hohen Frequenzen ist die Dämpfung durch den Freiweg der Membran minimal, d.h., Flüssigkeit wird zwischen dem Arbeitsraum und dem Ausgleichsraum nicht umgepumpt. Der Freiweg wird durch das Formänderungsvermögen der elastischen Aufhängung des Ausgleichsraumes 12 und der Membran 16 im Bereich der Bohrungen 20 des Stützkörpers 15 erreicht. Eine unerwünschte Kraftübertragung mit Geräuschentwicklung liegt daher nicht vor.

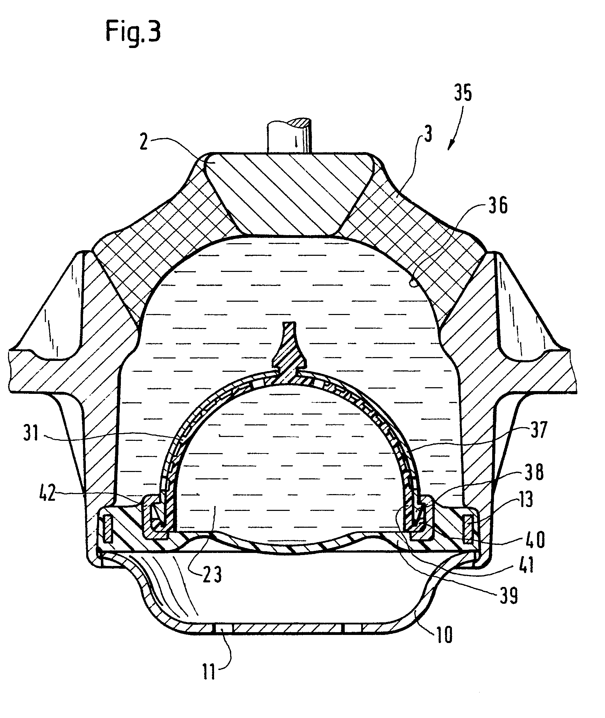

Nach Fig. 3 liegt ein elastisches Lager mit integrierter hydraulischer Dämpfung 35 in vereinfachter Bauweise vor. Hierzu weist es im Vergleich zu Lager 1 nach Fig. 1 einen Arbeitsraum 36 mit einer einstückigen, mit der Bodenkappe 10 eingebördelten elastischen Wand 39 der Ausgleichskammer auf.
Ein Stützkörper 37, vorzugsweise aus Kunststoff, ist mittels eines Vorsprungs 38 und unter Mitwirkung einer mit einem Dichtring 40
versehenen Membran 41 in den Haltering 42 nur durch einfaches Eindrücken flüssigkeitsdicht eingerastet.

Hierdurch entfällt eine weitere Bördelung wie bei Lager 1, Fig. 1.
Die Membran 41 weist die Noppen 31 nach Fig. 2 auf. Der Haltering 42
ist mit der elastischen Wand 39 der Ausgleichskammer durch Vulkanisieren verbunden. Die gummielastische Wand 39 und die Bodenkappe 10
sind in ein Gehäuse 42 eingebördelt.

Die Funktion des Lagers entspricht der des Lagers nach Fig. 1.

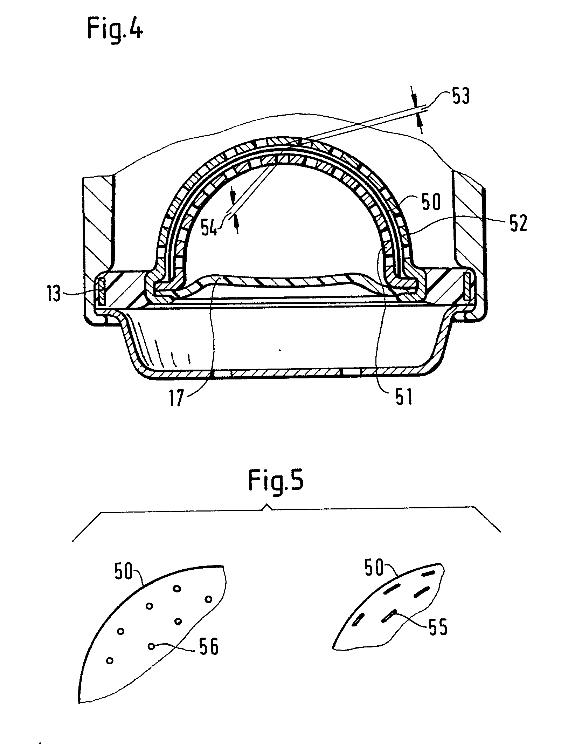

Nach Fig. 4 ist eine Membran 50 zwischen zwei kugelförmigen Stützkörpern 51, 52 frei eingesetzt. Die Stützkörper 51, 52 sind durch
Öffnungen 20 siebartig ausgebildet, während nach Fig. 5 die Membran 50 kleine Einschnitte 55 bzw. Schlitze oder kleine Löcher 56
aufweist.

Im unbelasteten Zustand der Membran 50 weist diese zu den Stützkörpern Abstände 53, 54 auf. Der äußere Stützkörper 52 ist mit dem
Ring 12 durch Vulkanisieren verbunden. Die elastische Wand der Ausgleichskammer 17 ist mit dem inneren Stützkörper 51 in den äußeren
Stützkörper 52 bei 57 eingebördelt. Durch entsprechende Anordnung
von Einschnitten 55 oder Löchern 56 in der Membran 50 mit Versatz
zu den Öffnungen 20 der Stützkörper werden partielle kugelförmige
Strömungsflächen erreicht. Demgemäß entspricht die Funktion des
damit ausgerüsteten Lagers etwa der zu Fig. 1 beschriebenen Funktion.
Die Membran 50 kann jedoch vergleichsweise weich ausgeführt werden,
da sie beidseitig gestützt wird. Hierdurch wird eine noch spezifischere
Abstimmung des Lagers für spezielle Einsatzzwecke ermöglicht.

## Patentansprüche

1. Elastisches Gummilager mit integrierter hydraulischer Dämpfung, bei dem ein Lagerkern, ein ringförmig ausgebildetes Federelement und eine Bodenplatte einen mit einer hydraulischen Flüssigkeit gefüllten Arbeitsraum umschließen, der durch eine Drosselöffnung mit einem volumenveränderlichen, flüssigkeitsgefüllten Ausgleichsraum verbunden ist, und bei dem zwischen den beiden Räumen eine Öffnung aufweisende Trennwand aus einem elastischen Werkstoff und eine starre Trennwand mit Durchbrechungen vorgesehen sind, dadurch gekennzeichnet, daß die aus einer elastischen Membran (16; 41; 50) und wenigstens einem starren Stützkörper (15; 37; 51; 52) bestehende Trennwand etwa kugelförmig ausgebildet ist und zwischen der Membran und der Trennwand ein Drosselsystem (30 bis 32) vorgesehen ist.

2. Gummilager nach Anspruch 1, dadurch gekennzeichnet, daß die Trennwand (15, 16; 37; 41; 50-52) sich in den Arbeitsraum (22; 36) hinein erstreckt und an einem Gehäuse (4) elastisch befestigt ist.

3. Gummilager nach Anspruch 1, dadurch gekennzeichnet, daß die Membran (16; 41) mit dem starren Stützkörper (15; 37) elastisch verbunden ist.

4.  Gummilager nach Anspruch 1,
    dadurch gekennzeichnet,
    daß die Membran (50) zwischen zwei siebartigen kugeligen Stützkörpern (51, 52) mit Spiel (53, 54) angeordnet ist.

5.  Gummilager nach Anspruch 1,
    dadurch gekennzeichnet,
    daß die Membran (16; 41; 50) unter dem Stützkörper (15; 37;
    52) sitzt und mit Wegbegrenzung (Befestigungsnoppen 25) elastisch
    an den Stützkörper gekoppelt ist.

6.  Gummilager nach Anspruch 1,
    dadurch gekennzeichnet,
    daß die Membran (16) ein Oberflächenprofil (30 bis 32) aus ineinander verschlungenen Kanälen zwischen regellos verteilten abgewinkelten Stegen (30), Noppen (31) oder Wänden bzw. Spiralabschnitten (32) besitzt und an der oberen Seite der Membran verhältnismäßig große Durchflußöffnungen (26) vorgesehen sind,
    während der Stützkörper (15; 37) an seiner Basis verhältnismäßig große Durchflußöffnungen (20) aufweist.

7.  Elastisches Gummilager, bei dem ein Lagerkern, ein ringförmig
    ausgebildetes Federelement und eine Bodenplatte einen mit einer
    hydraulischen Flüssigkeit gefüllten Arbeitsraum umschließen,
    der durch eine Drosselöffnung mit einem volumenveränderlichen,
    flüssigkeitsgefüllten Ausgleichsraum verbunden ist,
    und bei dem zwischen den beiden Räumen eine Öffnungen aufweisende
    Trennwand aus einem elastischen Werkstoff und starre Trennwand
    mit Durchbrechungen vorgesehen sind,
    dadurch gekennzeichnet,
    daß die zwischen zwei siebartigen, kugeligen Stützkörpern (51,
    52) mit Spiel (53, 54) angeordnete elastische Membran (50)
    Durchbrüche in Form vieler kleiner Löcher (55) oder Schlitze
    (56) aufweist.

Fig.1

0161554

Fig. 2

0161554

Fig.3

Fig.4

Fig.5